# EUROPEAN PATENT SPECIFICATION

(11) **EP 4 273 274 B1**
(45) Date of publication and mention of the grant of the patent: **25.11.2026**
(21) Application number: 22752597.9
(22) Date of filing: 27.01.2022
(51) Int. Cl.: C21C 5/52, F27B 3/20, F27D 3/16, F27D 21/02, F23D 99/00, F23D 14/22, F23D 14/78, F23M 11/04, C21C 5/46, F27B 3/08, F27D 99/00

(54) **BURNER WITH IMAGING DEVICE, ELECTRIC FURNACE PROVIDED WITH SAID BURNER, AND METHOD FOR MANUFACTURING MOLTEN IRON USING SAID ELECTRIC FURNACE**
BRENNER MIT BILDGEBUNGSVORRICHTUNG, ELEKTRISCHER OFEN MIT DEM BRENNER UND VERFAHREN ZUR HERSTELLUNG VON GESCHMOLZENEM EISEN MIT DEM ELEKTRISCHEN OFEN
BRÛLEUR DOTÉ D'UN DISPOSITIF D'IMAGERIE, FOUR ÉLECTRIQUE ÉQUIPÉ DUDIT BRÛLEUR ET PROCÉDÉ DE FABRICATION DE FER FONDU À L'AIDE DUDIT FOUR ÉLECTRIQUE

(30) Priority: 10.02.2021 JP 2021019724
(43) Date of publication of application: 08.11.2023
(73) Proprietor: JFE Steel Corporation, Tokyo 100-0011 (JP)
(72) Inventor: MIWA, Yoshihiro, Tokyo 100-0011 (JP); TSUTSUMI, Koichi, Tokyo 100-0011 (JP); OKUYAMA, Goro, Tokyo 100-0011 (JP)
(74) Representative: Grünecker Patent- und Rechtsanwälte PartG mbB
(86) International application number: PCT/JP2022/003172
(87) International publication number: WO 2022/172768

(56) References cited:
- EP-A1- 1 457 575
- WO-A1-2006/035570
- WO-A1-2014/007153
- WO-A1-2016/120943
- WO-A1-2018/074166
- CN-A- 105 043 123
- JP-B1- S5 036 299
- JP-U- H0 539 078
- JP-U- H0 539 078
- JP-Y2- S61 718

## Description

### TECHNICAL FIELD

The present disclosure relates to a burner with an imaging device, and in particular a burner with an imaging device that enables an operator to operate the burner while observing melting of a cold iron source to produce molten iron. The present disclosure also relates to an electric furnace provided with a burner with an imaging device and operable to efficiently produce molten iron by melting a cold iron source. Further, the present disclosure relates to a method of using an electric furnace to efficiently produce molten iron. The burner with the imaging device may be installed as appropriate in an electric furnace operable to produce molten iron from a cold iron source.

### BACKGROUND

When an electric furnace is used to melt cold iron sources such as ferrous scrap to produce molten iron, a cold iron source near an electrode melts quickly in the melting chamber, but a cold iron source far from the electrode, a so-called cold spot, melts more slowly, resulting in uneven melting rates of cold iron sources in the melting chamber. A resulting problem is that an overall operation time of the electric furnace is determined by the melting rate of the cold iron source in the cold spot.

In order to eliminate uneven melting rates of cold iron sources and to melt cold iron sources in the melting chamber in a well-balanced manner, a burner (auxiliary combustion burner) is installed at a position where a cold spot is apt to occur. The burner accelerates the melting of the cold iron source in the cold spot.

For example, JP H10-9524 A (PTL 1) describes an electric furnace auxiliary combustion burner having a triple pipe structure according to which oxygen gas for splattering unburned materials and cutting scrap is injected from a central location, fuel is injected from the periphery of the oxygen gas, and combustion oxygen gas is injected from the periphery of the fuel. According to the auxiliary combustion burner of PTL 1, a restriction portion is provided at a tip of a central oxygen gas injection pipe to increase speed of the central oxygen gas injection, and a swirl vane is provided in an annular space formed by a fuel injection pipe and a combustion oxygen gas injection pipe to impart a swirling motion to the combustion oxygen gas injected from an outermost circumference.

By use of the auxiliary burner described in PTL 1, cold iron sources in a melting chamber may be melted more uniformly. However, since it is not possible to visually check the status of a cold iron source in the melting chamber when operating the auxiliary burner, a determination of whether the cold iron source has been sufficiently melted depends on operator experience. For example, if a cold iron source present in a cold spot is still not melted when using the auxiliary burner, melting efficiency cannot be sufficiently increased. Further, excessive heating of a cold iron source in a cold spot will not merely eliminate the cold spot, but will instead promote a hot spot, resulting in an uneven temperature of molten iron in the melting chamber.

The inside of the melting chamber could, of course, be checked by opening a slag door, furnace lid, or the like. However, when opened, excess air enters the furnace from outside the furnace, resulting in significant heat loss. Further, an operator must get close to the furnace body, which could be disastrous in the event of an explosive boil of molten iron or slag. Therefore, optimizing timing of igniting and extinguishing a burner is difficult in practice, and efficient production of molten iron has been a challenge.

As a method for observing the inside of a furnace, JP H07-103670 A (PTL 2) proposes an in-furnace monitoring device that uses a television camera to capture images of the inside of the furnace and monitor internal conditions through television images. Patent documents EP 1 457 575 A1 and JP H05-39078 U also disclose an alternative burner with imaging device.

### CITATION LIST

### Patent Literature

PTL 1: JP H10-9524 A
PTL 2: JP H07-103670 A

### SUMMARY

### (Technical Problem)

However, when the inventors attempted to observe a cold iron source in a cold spot being melted by a burner by actually inserting the monitoring device disclosed in PTL 2 into an electric furnace, a lens tip of the monitoring device burned out in the high temperature environment of the electric furnace. Further, a situation was observed in which the lens tip was covered with molten slag that had boiled off, making it impossible to continue monitoring.

In view of the problems described above, it would thus be helpful to provide a burner with an imaging device operable to clearly observe the inside of a furnace in which an object is heated while the object is being heated by the burner. Further, it would also be helpful to provide an electric furnace provided with the burner with the imaging device, the electric furnace being operable to efficiently produce molten iron from a cold iron source, and a method of efficiently producing molten iron by using the electric furnace.

### (Solution to Problem)

As a result of studying the above problems, the inventors found that when a burner comprises a lens and an imaging device, and has a defined multiple pipe structure, the burner may be used efficiently while providing a good visual check of the inside of a furnace in which an object is heated by the burner. The inventors also found that when the burner is used to efficiently produce molten iron from a cold iron source, production efficiency may be increased and an electric power consumption rate required for production may be reduced.

Primary features of the present disclosure are as follows.
[1] A burner with an imaging device, the burner burning gaseous fuel to form a flame, the burner comprising: a lens; the imaging device disposed behind the lens, where a side of the lens toward an object to be imaged is defined as forward and an opposite side of the lens from the object to be imaged along an optical axis of the lens is defined as backward; and a multiple pipe structure comprising: an inner pipe that surrounds the lens; an outer pipe that surrounds the inner pipe, is larger in diameter than the inner pipe, and is separated from the inner pipe by a lens coolant passage; a gaseous fuel pipe disposed radially outward of the outer pipe and operable to inject the gaseous fuel in a direction forward of the lens; a combustion-supporting gas pipe disposed radially outward of the outer pipe and operable to inject combustion-supporting gas in the direction forward of the lens; and a cooling pipe disposed outermost in the multiple pipe structure that surrounds the gaseous fuel pipe and the combustion-supporting gas pipe.
   According to the above disclosure, a front of the lens is on the side of the object to be imaged, in other words the side where the object to be heated by the burner is disposed, and also the direction of flame formed from the burner. For example, when the burner is installed through a furnace wall of an electric furnace, the direction is toward the inside of the electric furnace. A back of the lens is the opposite side along the optical axis of the lens from the object to be imaged. For example, when the burner is installed through a furnace wall of an electric furnace, the direction is toward the outside of the electric furnace.
[2] The burner with an imaging device according to [1] wherein the gaseous fuel pipe is larger in diameter than the outer pipe, surrounds the outer pipe, and is separated from the outer pipe by a gaseous fuel passage, the combustion-supporting gas pipe is larger in diameter than the gaseous fuel pipe, surrounds the gaseous fuel pipe, and is separated from the gaseous fuel pipe by a combustion-supporting gas passage, the cooling pipe is larger in diameter than the combustion-supporting gas pipe, surrounds the combustion-supporting gas pipe, and is separated from the combustion-supporting gas pipe by a burner body coolant passage, and the inner pipe, the outer pipe, the gaseous fuel pipe, the combustion-supporting gas pipe, and the cooling pipe are arranged coaxially.
[3] The burner with an imaging device according to [2], wherein openings of pipes in a pipe axial direction are disposed in order of the inner pipe, the outer pipe, and the gaseous fuel pipe along the direction forward of the lens.
[4] An electric furnace provided with the burner as recited in any one of [1] to [3], the electric furnace being operable to melt a cold iron source to produce molten iron.
[5] A method of producing molten iron by melting a cold iron source using an electric furnace provided with the burner as recited in any one of [1] to [3], wherein operating conditions of the burner are controlled based on visual information obtained from the burner.
[6] The method of producing molten iron according to [5], wherein when the visual information obtained from the burner confirms presence of an adhering material on a front surface of the lens, the combustion-supporting gas is injected from the combustion-supporting gas pipe or the combustion-supporting gas is injected from the combustion-supporting gas pipe and the gaseous fuel is injected from the gaseous fuel pipe, in order to remove the adhering material from the lens.

### (Advantageous Effect)

According to the present disclosure, when heating an object with the burner, the inside of the furnace where the object (object to be imaged) is heated may be clearly observed.

When the burner is operated while observing the inside of the furnace where the object is heated, for example, when melting a cold iron source in an electric furnace to produce molten iron, a cold iron source in a cold spot may be efficiently melted and molten iron temperature may be uniformly controlled, which is effective in reducing production costs and has an exceptional effect in the industry.

### BRIEF DESCRIPTION OF THE DRAWINGS

In the accompanying drawings:
FIG 1 is a longitudinal sectional view illustrating a burner with an imaging device according to an embodiment of the present disclosure, viewed from the side;
FIG. 2A and FIG. 2B are longitudinal sectional views illustrating a burner with an imaging device according to at least one embodiment of the present disclosure, viewed from the front; FIG. 2A illustrates an example where each pipe is arranged coaxially, and FIG. 2B illustrates an example where gaseous fuel pipes and combustion-supporting gas pipes are arranged non-coaxially;
FIG. 3 is a longitudinal sectional view illustrating a burner with an imaging device according to an embodiment of the present disclosure, installed in an electric furnace; and
FIG 4 is a cross-sectional view illustrating a burner with an imaging device according to an embodiment of the present disclosure, installed in an electric furnace.

### DETAILED DESCRIPTION

The following describes embodiments of the present disclosure.

The following description merely indicates preferred example embodiments, and the present disclosure is in no way limited to the examples described.

### (Burner)

According to the present disclosure, a burner including a lens and an imaging device has a defined multiple pipe structure including an inner pipe that surrounds the lens, an outer pipe that surrounds the inner pipe, a gaseous fuel pipe operable to inject gaseous fuel, a combustion-supporting gas pipe operable to inject combustion-supporting gas, and an outermost cooling pipe. The defined structure of the burner with the imaging device enables clear observation of the heating of an object by the burner, even at very high temperatures exceeding 1000 °C. Therefore, when using the burner, operating conditions may be controlled while visually checking heating conditions due to burner under very high temperatures such as in an electric furnace, for example. As a result, for example, when producing molten iron from a cold iron source in an electric furnace, efficiency of melting the cold iron source by the burner may be improved and production costs may be reduced. The burner is particularly suitable for use as an auxiliary burner to accelerate the melting of an unmelted cold iron source in a so-called cold spot during the production of molten iron from cold iron sources in an electric furnace.

The following is a description of a preferred embodiment of the burner, with reference to the drawings.

### (Lens)

A burner 1 includes a lens 7 and an imaging device 8 behind the lens 7. The lens 7 is preferably a relay lens comprising multiple lenses. A relay lens allows axial length separation of a front surface of the lens 7 from the imaging device 8. For example, when installing the burner 1 in an electric furnace 90, this allows the front of the lens 7 to be disposed inside the furnace to clearly capture the object to be imaged, while also allowing the imaging device 8 to be disposed outside the furnace to protect the imaging device 8 from high heat and to simplify maintenance.

### (Imaging device)

The imaging device 8 is provided behind the lens 7 and captures and, as required, records an image of the object formed by the lens 7. For example, when the burner 1 is installed in the electric furnace 90, the imaging device 8 is preferably installed outside the furnace of the electric furnace 90, as described above. The imaging device 8 is typically a camera, and is preferably protected by a housing 83. To further protect the imaging device 8 from the heat of the electric furnace 90, an imaging device coolant 80 preferably flows through a coolant supply port 81 and a coolant outlet 82 provided at any location on the housing 83. The imaging device coolant 80 may be a liquid such as water or any gas, but for ease of handling, is preferably a gas, and more preferably air or an inert gas such as nitrogen.

Video captured by the imaging device 8 is generally transmitted via a cable connection (not illustrated) to a monitor or recording device (not illustrated) in an operation room where an operator operates.

### (Inner pipe)

The inner pipe 6 surrounds the lens 7. The inner pipe 6 surrounds the lens 7, thereby securing the lens 7 and physically protecting the lens 7 from the surrounding environment, such as heat, adhesive materials, and the like. The inner pipe 6 may be connected to the housing 83 to further secure the imaging device 8. An outer diameter of the inner pipe 6 is not limited to any particular value, but from a perspective of securing a flow rate of the lens coolant 70 described below while keeping costs down, the outer diameter is preferably 100 mm or less, and usually 20 mm or more.

The inner pipe 6 may be a tubular shape, and material properties should be appropriately selected in relation to ambient temperature and installation location strength. From a cost perspective, carbon steel, stainless steel, or the like is preferable.

When the lens 7 is a relay lens, the inner pipe 6 and the lens 7 are preferably arranged coaxially.

### (Outer pipe)

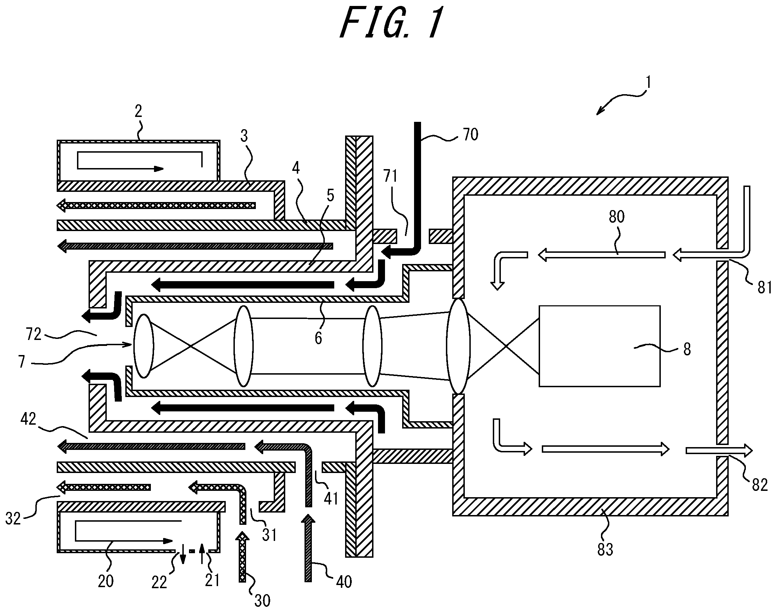

The outer pipe 5 is larger in diameter than the inner pipe 6, surrounds the inner pipe 6 and is separated from the inner pipe 6 by a lens coolant passage. By use of a multiple pipe structure with the outer pipe 5 surrounding the inner pipe 6, the lens 7 may be better protected from the high heat of the surrounding environment. Further, the outer pipe 5 surrounds the inner pipe 6 separated by the lens coolant passage, allowing the lens coolant 70 to flow through the passage into a space between the inner pipe 6 and outer pipe 5, further protecting the lens 7 from the high heat of the surrounding environment. For example, when the lens coolant 70 is discharged in a direction forward of the lens 7 through a coolant supply port 71 and a coolant outlet 72 disposed as illustrated by the outer pipe 5 in FIG. 1, the lens coolant 70 may be effectively used to blow away molten iron 96 and molten slag splattering from the furnace of the electric furnace 90 and thereby avoid adhesion and deposition of same on the front surface of the lens.

For example, in order to discharge the lens coolant 70 into the electric furnace 90 without affecting the composition of the molten iron 96 in the furnace 90, the lens coolant 70 is preferably a gas, and more preferably air or an inert gas such as nitrogen. The flow rate of the lens coolant 70 is preferably 50 NL/min or more. The unit "NL/min" is a unit of flow rate commonly used in the present technical field and can usually be treated as "L/min".

The outer pipe 5 may be connected to the housing 83 to further secure the imaging device 8. An inner and an outer diameter of the outer pipe 5 are not limited to any particular values, but from the perspective of securing the flow rate of the lens coolant 70 while keeping costs down, the inner diameter is preferably 120 mm or less and may be 30 mm or more. From the perspective of keeping costs down while securing a flow rate of a gaseous fuel 40, described later, the outer diameter is preferably 40 mm or more.

The outer pipe 5 may be a tubular shape, and material properties should be appropriately selected in relation to ambient temperature and installation location strength. From a cost perspective, carbon steel, stainless steel, or the like is preferable.

When the lens 7 is a relay lens, the outer pipe 5, inner pipe 6, and the lens 7 are preferably arranged coaxially. An opening in an axial direction of the outer pipe 5 (on paper, in FIG. 1, a left side tip of the outer pipe 5) is preferably located farther forward of the lens 7 than an opening in an axial direction of the inner pipe 6 (on paper, in FIG. 1, a left side tip of the inner pipe 6). By setting back the front surface of the lens 7 in this way, adhesion to and deposition on the front surface of the lens by the molten iron 96 and molten slag splattering from inside the furnace of the electric furnace 90 may be better avoided.

### (Gaseous fuel pipe)

The gaseous fuel pipe 4 is disposed radially outward of the outer pipe 5 and is operable to inject the gaseous fuel 40 in the direction forward of the lens 7. The gaseous fuel 40 injected is burned in the electric furnace 90, for example, forming a flame from the burner 1 to target and melt a cold iron source 94 that is unmelted.

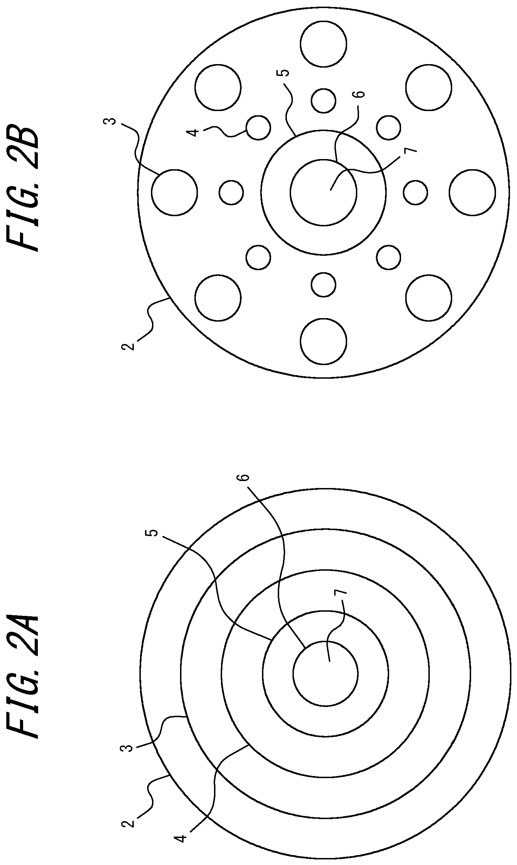

The gaseous fuel pipe 4 may be larger in diameter than the outer pipe 5, surrounding the outer pipe 5, and separated from the outer pipe 5 by a gaseous fuel passage, as illustrated in FIG. 1 and FIG. 2A, and may be arranged singly or in plurality near the outer circumference of the outer pipe 5, as illustrated in FIG. 2B. Arrangements illustrated in FIG. 1 and FIG. 2A are preferable. By use of a multiple pipe structure with the gaseous fuel pipe 4 further surrounding the outer pipe 5, the lens 7 may be further protected from the high heat of the surrounding environment. Further, because the gaseous fuel pipe 4 surrounds the outer pipe 5 separated by a gaseous fuel passage, the gaseous fuel 40 may be injected via the passage to a space between the outer pipe 5 and the gaseous fuel pipe 4 surrounding the outer pipe 5, and therefore, for example, the molten iron 96 and molten slag splattering from the furnace of the electric furnace 90 may be also blown away by the gaseous fuel 40, and this may be effectively used to avoid adhesion and deposition of same on the front surface of the lens. For example, the gaseous fuel 40 may be injected forward of the lens 7 through a gaseous fuel supply port 41 and a gaseous fuel injection port 42 disposed as illustrated by the gaseous fuel pipe 4 in FIG. 1.

As the gaseous fuel 40, examples include liquefied petroleum gas (LPG), liquefied natural gas (LNG), hydrogen, steelworks by-product gas (C gas, B gas, etc.), and mixed gas comprising two or more of these gases, each of which may be used alone or in combination with other gas.

The flow rate of the gaseous fuel 40 is preferably 150 NL/min or more. The gaseous fuel pipe 4 may be fixed in connection with the outer pipe 5. An inner and an outer diameter of the gaseous fuel pipe 4 are not limited to any particular values, but from the perspective of securing the flow rate of the gaseous fuel 40 and reducing costs, when the gaseous fuel pipe 4 surrounds the outer pipe 5, the inner diameter is preferably 140 mm or less and may be more than 40 mm. From the perspective of keeping costs down while securing a flow rate of a combustion-supporting gas 30 described below, the outer diameter is preferably 50 mm or more.

The gaseous fuel pipe 4 may be a tubular shape, and material properties should be appropriately selected in relation to ambient temperature and installation location strength. From a cost perspective, carbon steel, stainless steel, or the like is preferable.

When the lens 7 is a relay lens, the gaseous fuel pipe 4, the outer pipe 5, the inner pipe 6 and the lens 7 are preferably arranged coaxially. An opening in an axial direction of the gaseous fuel pipe 4 (on paper, in FIG. 1, a left side tip of the gaseous fuel pipe 4) is preferably located farther forward of the lens 7 than the opening in the axial direction of the outer pipe 5 (on paper, in FIG. 1, the left side tip of the outer pipe 5). By setting back the front surface of the lens 7 farther in this way, adhesion to and deposition on the front surface of the lens by the molten iron 96 and molten slag splattering from inside the furnace of the electric furnace 90 may be further avoided.

### (Combustion-supporting gas pipe)

The combustion-supporting gas pipe 3 is disposed radially outward of the outer pipe 5 and is operable to inject the combustion-supporting gas 30 forward of the lens 7. The combustion-supporting gas 30 that is injected promotes combustion of the gaseous fuel 40 described above, and the gaseous fuel 40 is burned in the electric furnace 90, for example, forming a flame from the burner 1 to target and melt the cold iron source 94 that is unmelted.

The combustion-supporting gas pipe 3 may be larger in diameter than the gaseous fuel pipe 4, surrounding the gaseous fuel pipe 4, and separated from the gaseous fuel pipe 4 by a combustion-supporting gas passage, as illustrated in FIG. 1 and FIG. 2A, and may be arranged singly or in plurality near the outer circumference of the outer pipe 5, as illustrated in FIG. 2B. Arrangements illustrated in FIG. 1 and FIG. 2A are preferable. By use of a quadruple pipe structure with the combustion-supporting gas pipe 3 further surrounding the gaseous fuel pipe 4, the lens 7 may be further protected from the high heat of the surrounding environment. Further, because the combustion-supporting gas pipe 3 surrounds the gaseous fuel pipe 4 separated by the combustion-supporting gas passage, the combustion-supporting gas 30 may be injected via the passage to a space between the gaseous fuel pipe 4 and the combustion-supporting gas pipe 3 surrounding the gaseous fuel pipe 4 and therefore, for example, the molten iron 96 and molten slag splattering from the furnace of the electric furnace 90 may be blown away by the combustion-supporting gas 30 to better avoid adhesion and deposition of same on the front surface of the lens. For example, the combustion-supporting gas 30 may be injected forward of the lens 7 through a combustion-supporting gas supply port 31 and a combustion-supporting gas injection port 32 disposed as illustrated by the combustion-supporting gas pipe 3 in FIG. 1.

As the combustion-supporting gas 30, pure oxygen (industrial oxygen), oxygen-enriched air, or air may be used, but pure oxygen is preferable when melting the cold iron source 94 in the electric furnace 90.

The flow rate of the combustion-supporting gas 30 is preferably 300 NL/min or more. The combustion-supporting gas pipe 3 may be fixed in connection with the gaseous fuel pipe 4. An inner and an outer diameter of the combustion-supporting gas pipe 3 are not limited to any particular values, but from the perspective of securing the flow rate of the combustion-supporting gas 30 and reducing costs, when the combustion-supporting gas pipe 3 surrounds the gaseous fuel pipe 4, the inner diameter is preferably 150 mm or less and may be more than 50 mm.

The combustion-supporting gas pipe 3 may be a tubular shape, and material properties should be appropriately selected in relation to ambient temperature and installation location strength. From a cost perspective, carbon steel, stainless steel, or the like is preferable.

When the lens 7 is a relay lens, the combustion-supporting gas pipe 3, the gaseous fuel pipe 4, the outer pipe 5, the inner pipe 6, and the lens 7 are preferably arranged coaxially.

### (Cooling pipe)

The cooling pipe 2 surrounds the gaseous fuel pipe 4 and the combustion-supporting gas pipe 3 and is disposed at the outermost part of the burner body. For example, when burner body coolant 20 is flowed through a coolant supply port 21 and a coolant outlet 22 disposed as illustrated by the cooling pipe 2 in FIG. 1, the burner body may be used in high-temperature environments such as the electric furnace 90 while cooling the burner body. For example, even when producing the molten iron 96 from the cold iron source 94 in the electric furnace 90, the burner body coolant 20 may be discharged outside the furnace via the coolant outlet 22, and therefore from the perspective of cooling efficiency, the burner body coolant 20 is preferably a liquid, and water is preferably used.

When the burner 1 is used at high temperatures, icicle-like masses may form from a forward end of the cooling pipe 2. Even in such cases, the flame of the burner 1 is capable of melting away icicle-like masses, keeping an image field clear.

Material properties of the cooling pipe 2 should be appropriately selected in relation to ambient temperature and installation location strength. From a cost perspective, carbon steel, stainless steel, or the like is preferable.

### (Electric furnace)

An electric furnace according to the present disclosure is an electric furnace for melting a cold iron source to produce molten iron, and is provided with the burner with the imaging device as described above. When the electric furnace is provided with the defined burner with the imaging device, the burner may be operated while visually checking on the cold iron source in the cold spot being melted by the burner. Accordingly, inadequate melting and excessive melting by the burner may be prevented, melting efficiency may be increased, and production costs may be reduced.

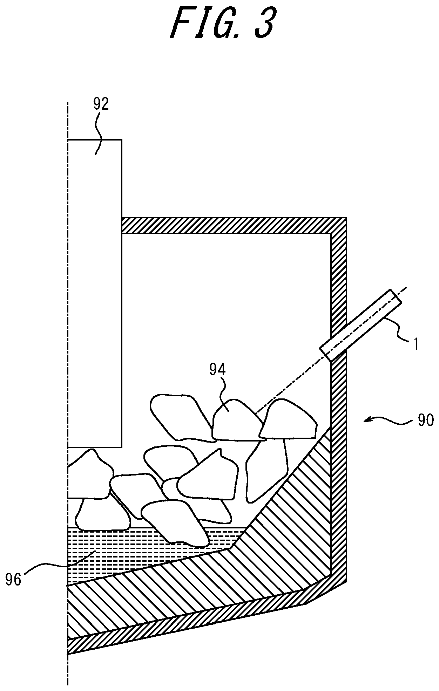

Aside from comprising the burner 1, the electric furnace 90 is not limited in any particular way, and an ordinary electric furnace can be used. FIG. 3 schematically illustrates the cold iron source 94 being melted in the melting chamber of the electric furnace 90 by heat generated by an electrode 92 and the flame of the burner 1 to become the molten iron 96. In a cold spot in the melting chamber that is relatively far from the electrode 92, the cold iron source 94 may not receive enough heat from the electrode 92 and may remain unmelted. The electric furnace is provided with the defined burner, and therefore the burner may be used only when necessary, with good confirmation of the presence or absence of the cold iron source 94 that is unmelted.

Disposition of the burner 1 is not limited to any particular position as long as the cold iron source 94 in the cold spot is in view, and the burner 1 is preferably installed through a furnace wall of the melting chamber, as illustrated in FIG. 3. Such an installation allows the front of lens 7 to be disposed inside the furnace to clearly capture the cold iron source 94 in the furnace, while the imaging system 8 is disposed outside the furnace to protect the imaging system 8 from high heat and simplify maintenance. Angle and height at which the burner 1 is installed is set appropriately such that the cold iron source 94 may be clearly captured.

Further, the burner 1 is preferably installed such that at least one of an oxygen blowing lance 97 and a carbon material blowing lance 98 are in a field of view, both of which are described below, or more preferably, such that both are in the field of view. When the burner 1 may also be used to visually check the oxygen blowing lance 97 and/or the carbon material blowing lance 98, operating conditions of the oxygen blowing lance 97 and/or the carbon material blowing lance 98 may be controlled even more efficiently. For example, on confirming that the cold iron source 94 is sufficiently melted, a blowing amount from the oxygen blowing lance 97 and/or the carbon material blowing lance 98 may be reduced or stopped. In order that the burner 1 may also be used in capturing the oxygen blowing lance 97 and/or the carbon material blowing lance 98, the field of view of the burner 1 may be widened, or a new burner with an imaging device may be installed to monitor the oxygen blowing lance 97 and the carbon material blowing lance 98.

### (Method of producing molten iron)

The production method is a method of producing molten iron by melting a cold iron source comprises controlling operating conditions of the burner based on visual information obtained from the burner with the imaging device described above. The production method then produces the same effects as the electric furnace described above.

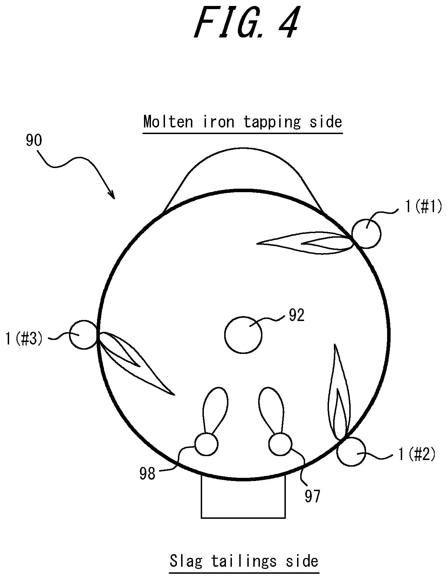

The production method is not particularly limited in any way, normal processing may be followed, except that an electric furnace provided with the defined burner with the imaging device is used and visual information from the burner with the imaging device is used. FIG. 4 schematically illustrates the molten iron 96 being produced using the electric furnace 90 provided with a plurality of the burner 1. The cold iron source 94 is supplied to the melting chamber of the electric furnace 90, and the heat generated by the electrode 92 melts the cold iron source 94 into the molten iron 96. Preheating the cold iron source 94 before supplying to the melting chamber may increase melting efficiency. During melting, carbon material as an auxiliary heat source may be further supplied from the carbon material blowing lance 98, and oxygen for decarburization may be further supplied from the oxygen blowing lance 97. Further, the cold iron source 94 that is present in the cold spot and unmelted is intensively melted using the burner 1 to efficiently produce the molten iron 96. The molten iron 96 accumulated in the melting chamber may be tapped from the furnace through any tapping port on a molten iron tapping side. The molten slag produced with the molten iron 96 may be discharged from the furnace from any tailings outlet on a slag tailings side.

According to the present disclosure, the burner 1 may be operated based on visual information obtained from the burner 1, for example, while checking on the melting state of the cold iron source 94, and this may optimize operating conditions of the burner 1 without hazardous operations. This is useful in molten iron production processes to increase production efficiency and reduce production costs.

Specifically, for example, when visual information obtained from the burner 1 confirms the cold iron source 94 is unmelted, the burn rate of the burner 1 is preferably increased to accelerate melting. On the other hand, when visual information obtained from the burner 1 confirms that the cold iron source 94 in a cold spot has already been melted, the burn rate of the burner 1 is preferably reduced, or the burner 1 extinguished, to control unnecessary power consumption due to excess heating and to inhibit iron oxidation.

Conventional burners do not have the imaging device 8 and it was not possible in practice to check the melting state of the cold iron source 94 while operating the burner. Therefore, according to conventional technology, burners were operated according to operator experience, and there was a tendency to overuse burners to avoid leaving an unmelted cold iron source. However, according to the present disclosure, operating conditions of the burner may be controlled in a timely manner while visually checking the melting state of a cold iron source, making it possible to optimize the operating conditions of the burner and to deal with the cold iron source 94 that is unmelted in a highly efficient manner.

During the production of molten iron, the molten iron 96 and molten slag may boil off in the furnace and adhere to and deposit on the front surface of the lens of the burner 1, narrowing the field of view of an obtained image. When the visual information obtained from the burner 1 confirms the presence of an adhering material on the front surface of the lens, the adhering material is preferably removed from the lens by injecting the combustion-supporting gas 30 from the combustion-supporting gas pipe 3 or, in addition, by injecting more of the gaseous fuel 40 from the gaseous fuel pipe 4. For example, on confirming that slag has adhered to or deposited on the front surface of the lens, at first only the combustion-supporting gas 30 is injected to oxidize iron in the slag and generate oxidation reaction heat, which may again melt and remove the adhered or deposited slag. When this does not remove the adhered or deposited slag, the gaseous fuel 40 may be injected in addition to the combustion-supporting gas 30, and the combustion heat of the flame formed further melts the slag to remove the adhered or deposited slag. In this way, melting efficiency according to the burner may be optimized while constantly monitoring the cold iron source 94.

Further, the burner 1 is more preferably used to check on at least one, and more preferably both, of the oxygen blowing lance 97 and the carbon material blowing lance 98, and when the cold iron source 94 that is unmelted is identified, to increase the blowing amount from the oxygen blowing lance 97 and/or the carbon material blowing lance 98 to further promote melting. On the other hand, on confirmation that the cold iron source 94 is already melted using the burner 1, the blowing amount from the oxygen blowing lance 97 and/or the carbon material blowing lance 98 is more preferably reduced or stopped.

### EXAMPLES

The following describes specific examples of the present disclosure. The following examples merely indicate preferred examples, and the present disclosure is not limited in any way to the described examples. Further, the following examples may be modified without departing from the scope and spirit of the present disclosure, and such modifications are also included in the technical scope of the present disclosure.

### Example 1

The electric furnace 90 with the burner 1 as illustrated in FIG. 1 and installed as schematically illustrated in FIG. 3 and FIG. 4 was used to melt the cold iron source 94 to produce the molten iron 96. The electric furnace 90 was a direct current type having a furnace diameter of about 6.3 m, a furnace height of 4.1 m, and a steel output of about 120 tonnes, with the oxygen blowing lance 97 and the carbon material blowing lance 98 being water-cooled and installed in the furnace from above and the electrode 92 installed singly in a horizontal center of the furnace. A plurality of the burner 1 (#1, #2, #3) was installed through the furnace wall at a total of three locations, divided roughly evenly around the perimeter of the furnace body (see FIG. 3).

Basic operating conditions of the electric furnace were as indicated below.
Supply weight of cold iron source per charge: approx. 130 tonnes
Supply weight of cold iron source each time: approx. 65 tonnes
Number of times cold iron source supplied per charge: 2 times
Type of cold iron source: Heavy H2 (from "Uniform Standards of Ferrous Scraps" by The Japan Ferrous Raw Materials Association)
Steel output per charge: approx. 120 tonnes
Target tapping temperature: 1580 °C
Target tapping carbon concentration: 0.060 %.
Supply weight of coke lumps (secondary raw material): 1000 kg
Supply weight of lime (secondary raw material): 500 kg
Oxygen blowing flow rate (pure oxygen): 0 Nm³/h to 5000 Nm³/h
Carbon material blowing rate (coke breeze): 0 kg/min to 100 kg/min, carbon material carrier gas flow rate (air): approx. 350 Nm³/h
Flow rate of gaseous fuel (LNG) per burner 1: 0 Nm³/h to 350 Nm³/h
Flow rate of combustion-supporting gas (pure oxygen) per burner 1: 0 Nm³/h to 770 Nm³/h
Flow rate of lens coolant (air) per burner 1: 8 Nm³/h

The cold iron source 94 was supplied from the bucket into the electric furnace 90 on two separate occasions, before and during operation. Before operation, as auxiliary fuel, coke lumps and lime tailings material were supplied into the electric furnace 90 from an auxiliary fuel supply chute (not illustrated).

The cold iron source 94 was melted while pure oxygen and coke breeze were supplied from the oxygen blowing lance 97 and the carbon material blowing lance 98, respectively.

Here, during the melting process, the burner 1 was used to observe the cold iron source 94 in three cold spots distant from the electrode 92, and the operating conditions of the burner 1 were changed accordingly based on visual information obtained. Specifically, when the cold iron source 94 that was unmelted was identified, the flow rate of the gaseous fuel 40 and/or the flow rate of the combustion-supporting gas 30 of the burner 1 that was used to image the cold iron source 94 were increased within the above ranges until it was confirmed that all the cold iron source 94 was melted. On the other hand, when it was confirmed that all the cold iron source 94 had melted to become the molten iron 96, the flow rate of the gaseous fuel 40 and/or the flow rate of the combustion-supporting gas 30 of the burner 1 that was used to image the molten iron 96 were decreased within the above ranges, or the burner 1 was extinguished.

Further, when visual information from the burner 1 confirmed that material had adhered to the lens 7, the flow rate of the combustion-supporting gas 30 and, if necessary, the flow rate of the gaseous fuel 40 of the burner 1 that was used to image the adhering material were increased within the above ranges until confirmation was obtained that the adhering material had been removed. This secured a clear field of view throughout the operation.

The melting process for one charge was completed when 120 tonnes of the molten iron 96 was produced, and the molten iron 96 was removed from a tapping outlet to a ladle outside the furnace. This was repeated for 20 charges. The target temperature of the molten iron 96 when tapping was approximately 1580 °C and the target carbon concentration of the molten iron 96 when tapping was 0.060 mass%, and according to Example 1 the average molten iron temperature when tapping was 1600 °C and the average carbon concentration was 0.056 mass%.

Average values for production time, electric power consumption rate, oxygen consumption rate, coke consumption rate, and gaseous fuel consumption rate and combustion-supporting gas consumption rate per burner 1 were calculated. The results are listed in Table 1. Here, each consumption rate can be calculated as an amount used per tonne of molten iron tapped.

### Example 2

According to Example 2, the molten iron 96 was produced for 20 charges under the same conditions as in Example 1, except for the following points. According to Example 2, the cold iron source 94 near the oxygen blowing lance 97 and the carbon material blowing lance 98 was also observed via the burner 1 during the melting process, and the operating conditions of the oxygen blowing lance 97 and the carbon material blowing lance 98 were also changed accordingly based on the visual information obtained. Specifically, when the cold iron source 94 that was unmelted was identified, the blowing flow rate from the oxygen blowing lance 97 and the blowing rate from the carbon material blowing lance 98 were increased within the above ranges. On the other hand, when it was confirmed that all of the cold iron source 94 had been melted to the molten iron 96, the blowing flow rate from the oxygen blowing lance 97 and the blowing rate from the carbon material blowing lance 98 were reduced within the above ranges, or stopped.

The target temperature of the molten iron 96 when tapping was approximately 1580 °C and the target carbon concentration of the molten iron 96 when tapping was 0.060 mass%, and according to Example 2 the average molten iron temperature when tapping was 1590 °C and the average carbon concentration was 0.058 mass%.

Average values for production time, electric power consumption rate, oxygen consumption rate, coke consumption rate, and gaseous fuel consumption rate and combustion-supporting gas consumption rate per burner 1 were calculated. The results are listed in Table 1.

### Comparative Example

The operating conditions of the burner 1 were controlled based on operator experience without using the imaging device 8 of the burner 1 and without visual confirmation of the melting state of the cold iron source 94. Otherwise, the molten iron 96 was produced for 20 charges under the same conditions as those of Example 1 and Example 2.

The target temperature of the molten iron 96 when tapping was approximately 1580 °C and the target carbon concentration of the molten iron 96 when tapping was 0.060 mass%, and according to the comparative example the average molten iron temperature when tapping was 1640 °C and the average carbon concentration was 0.054 mass%.

Average values for production time, electric power consumption rate, oxygen consumption rate, coke consumption rate, and gaseous fuel consumption rate and combustion-supporting gas consumption rate per burner 1 were calculated. The results are listed in Table 1.

### [Table 1]

**Table 1**

| | Melting process | Average production time (min/charge) | Average electric power consumption (kWh/t) | Electric furnace | | Burner | |
|---|---|---|---|---|---|---|---|
| | | | | Average oxygen consumption (Nm³/t) | Average carbon material consumption (kg/t) | Average gaseous fuel consumption (Nm³/t) | Average combustion-supporting gas consumption (Nm³/t) |
| Comparative example | Burner operating conditions controlled based on empirical judgment without use of imaging device | 62.5 | 385.3 | 28.4 | 7.2 | 4.2 | 9.2 |
| Example 1 | Burner operating conditions controlled based on visual information from imaging device | 60.6 | 373.7 | 27.5 | 7.0 | 4.1 | 9.0 |
| Example 2 | Burner, oxygen blowing lance, and carbon material blowing lance operating conditions controlled based on visual information from imaging device | 59.4 | 366.0 | 27.0 | 6.8 | 4.0 | 8.8 |

| | | | | | | | |
|---|---|---|---|---|---|---|---|
| In the units of the table, "/t" means per tonne of tapped molten iron. | | | | | | | |

As can be seen from Table 1, compared to the comparative example, Examples 1 and 2 reduced the production time and electric power consumption rate. The oxygen consumption rate, coke consumption rate, burner gaseous fuel consumption rate, and burner combustion-supporting gas consumption rate were also reduced according to Examples 1 and 2. This is because the furnaces of Examples 1 and 2 were operable while visually checking on internal furnace conditions, in particular enabling quickly checking and determining the melting state of cold iron sources in cold spots to immediately control burner operating conditions to effectively suppress unnecessary blowing of burners.

Further, the rapid confirmation of the melting down of the cold iron sources also made it possible to supply additional cold iron sources at the appropriate time for continuous operation. The additional supply of cold iron sources affects the production time and electric power consumption rate. When the timing of additional cold iron source supply is too early, new cold iron sources may be supplied on top of semi-molten or unmelted cold iron sources in the furnace, causing them to fuse together and form large clumps. This inhibits the progress of melting, resulting in a worse production time and electric power consumption rate. When the timing of additional cold iron source supply is too late, energy is wasted and molten iron is excessively heated. This again results in a worse production time and electric power consumption rate.

In the case of Examples 1 and 2, the burner, lens, and imaging device are integrated into a single unit, and the heat from the burner has successfully avoided adhesion or deposition of a material such as slag from covering the front of the lens. Further, even when material such as slag adhered to or deposited on the front of the lens, the condition of the front of the lens of the burner could always be checked via the imaging device, and therefore the burner could be operated while eliminating blockages in the field of view caused by adhesion or deposition of material such as slag by immediately injecting combustion-supporting gas or gaseous fuel as required. In this way, the state of the cold iron source could be constantly monitored in the furnace during operation.

Further, according to Example 2, the operating conditions of the oxygen blowing lance 97 and the carbon material blowing lance 98 were also adjusted based on visual information via the burner, which further improved melting efficiency. Specifically, when oxygen and carbon material are blown in, the combustion of the carbon material generates carbon monoxide gas, which promotes so-called "slag forming", in which molten slag bubbles. Where the slag forming has an effect of reducing radiant heat of an arc and improving the melting efficiency of the cold iron source, the state of the molten iron and molten slag imaged via the burner enabled prevention of excessive blowing of oxygen and carbon material, and slag forming could be successfully generated and maintained. This resulted in further improvement of melting efficiency and further reduction of electric power consumption and production time.

### INDUSTRIAL APPLICABILITY

According to the present disclosure, when heating an object with the burner, the inside of the furnace where the object is heated may be clearly observed, reducing production costs in the furnace.

### REFERENCE SIGNS LIST

- 1: Burner (with imaging device)
- 2: Cooling pipe
- 20: Burner body coolant
- 21: Coolant supply port
- 22: Coolant outlet
- 3: Combustion-supporting gas pipe
- 30: Combustion-supporting gas
- 31: Combustion-supporting gas supply port
- 32: Combustion-supporting gas injection port
- 4: Gaseous fuel pipe
- 40: Gaseous fuel
- 41: Gaseous fuel supply port
- 42: Gas fuel injection port
- 5: Outer pipe
- 6: Inner pipe
- 7: Lens
- 70: Lens coolant
- 71: Coolant supply port
- 72: Coolant outlet
- 8: Imaging device
- 80: Imaging device coolant
- 81: Coolant supply port
- 82: Coolant outlet
- 83: Housing
- 90: Electric furnace
- 92: Electrode
- 94: Cold iron source
- 96: Molten iron
- 97: Oxygen blowing lance
- 98: Carbon material blowing lance

## Claims

1. A burner (1) with an imaging device (8), the burner (1) burning gaseous fuel (40) to form a flame, the burner (1) comprising:
a lens (7);
the imaging device (8) disposed behind the lens (7), where a side of the lens (7) toward an object to be imaged is defined as forward and an opposite side of the lens (7) from the object to be imaged along an optical axis of the lens (7) is defined as backward; and
a multiple pipe structure comprising:
an inner pipe (6) that surrounds the lens (7); and
an outer pipe (5) that surrounds the inner pipe (6), is larger in diameter than the inner pipe (6), and is **characterized by** the outer pipe being separated from the inner pipe (6) by a lens coolant (70) passage
a gaseous fuel pipe (4) disposed radially outward of the outer pipe (5) and operable to inject the gaseous fuel (40) in a direction forward of the lens (7);
a combustion-supporting gas pipe (3) disposed radially outward of the outer pipe (5) and operable to inject combustion-supporting gas (30) in the direction forward of the lens (7); and
a cooling pipe (2) disposed outermost in the multiple pipe structure that surrounds the gaseous fuel pipe (4) and the combustion-supporting gas pipe (3).

2. The burner (1) with an imaging device (8) according to claim 1, wherein
the gaseous fuel pipe (4) is larger in diameter than the outer pipe (5), surrounds the outer pipe (5), and is separated from the outer pipe (5) by a gaseous fuel (40) passage,
the combustion-supporting gas pipe (3) is larger in diameter than the gaseous fuel pipe (4), surrounds the gaseous fuel pipe (4), and is separated from the gaseous fuel pipe (4) by a combustion-supporting gas (30) passage,
the cooling pipe (2) is larger in diameter than the combustion-supporting gas pipe (3), surrounds the combustion-supporting gas pipe (3), and is separated from the combustion-supporting gas pipe (3) by a burner body coolant (20) passage, and
the inner pipe (6), the outer pipe (5), the gaseous fuel pipe (4), the combustion-supporting gas pipe (3), and the cooling pipe (2) are arranged coaxially.

3. The burner (1) with an imaging device (8) according to claim 2, wherein openings of pipes in a pipe axial direction are disposed in order of the inner pipe (6), the outer pipe (5), and the gaseous fuel pipe (4) along the direction forward of the lens (7).

4. An electric furnace (90) provided with the burner (1) with an imaging device (8) as recited in any one of claims 1 to 3, the electric furnace (90) being operable to melt a cold iron source (94) to produce molten iron.

5. A method of producing molten iron by melting a cold iron source (94) using an electric furnace (90) provided with the burner (1) with an imaging device (8) as recited in any one of claims 1 to 3, wherein
operating conditions of the burner (1) are controlled based on visual information obtained from the burner (1).

6. The method of producing molten iron according to claim 5, wherein
when the visual information obtained from the burner (1) confirms presence of an adhering material on a front surface of the lens (7), the combustion-supporting gas (30) is injected from the combustion-supporting gas pipe (3) or the combustion-supporting gas (30) is injected from the combustion-supporting gas pipe (3) and the gaseous fuel (40) is injected from the gaseous fuel pipe (4), in order to remove the adhering material from the lens (7).

## Patentansprüche

1. Brenner (1) mit einem bildgebenden Gerät (8), wobei der Brenner (1) gasförmigen Brennstoff (40) verbrennt, um eine Flamme zu erzeugen, und wobei der Brenner (1) umfasst:
eine Linse (7),
wobei das bildgebende Gerät (8) hinter der Linse (7) angeordnet ist, wobei eine einem abzubildenden Objekt zugewandte Seite der Linse (7) als vorwärts definiert ist und eine dem abzubildenden Objekt entlang einer optischen Achse der Linse (7) abgewandte Seite der Linse (7) als rückwärts definiert ist, und
eine Mehrfachrohrkonstruktion, die umfasst:
ein Innenrohr (6), das die Linse (7) umgibt, und
ein Außenrohr (5), welches das Innenrohr (6) umgibt, einen größeren Durchmesser als das Innenrohr (6) aufweist und **dadurch gekennzeichnet ist, dass** das Außenrohr durch einen Kühlmittelkanal (70) für die Linse vom Innenrohr (6) getrennt ist,
ein Rohr (4) für gasförmigen Brennstoff, das radial außerhalb des Außenrohrs (5) angeordnet ist und in Funktion ist, den gasförmigen Brennstoff (40) in eine Richtung vorwärts von der Linse (7) einzuspritzen,
ein Verbrennungsunterstützungsgasrohr (3), das radial außerhalb des Außenrohrs (5) angeordnet ist und in Funktion ist, Verbrennungsunterstützungsgas (30) in die Richtung vorwärts von der Linse (7) einzuspritzen, und
ein Kühlrohr (2), das in der Mehrfachrohrstruktur am äußersten Rand angeordnet ist und das Rohr (4) für gasförmigen Brennstoff und das Verbrennungsunterstützungsgasrohr (3) umgibt.

2. Brenner (1) mit einem bildgebenden Gerät (8) gemäß Anspruch 1, wobei
das Rohr (4) für gasförmigen Brennstoff einen größeren Durchmesser als das Außenrohr (5) aufweist, das Außenrohr (5) umgibt und von dem Außenrohr (5) durch einen Kanal (40) für gasförmigen Brennstoff getrennt ist,
das Verbrennungsunterstützungsgasrohr (3) einen größeren Durchmesser als das Rohr (4) für gasförmigen Brennstoff aufweist, das Rohr (4) für gasförmigen Brennstoff umgibt und durch einen Verbrennungsunterstützungsgaskanal (30) vom Rohr (4) für gasförmigen Brennstoff getrennt ist,
das Kühlrohr (2) einen größeren Durchmesser als das Verbrennungsunterstützungsgasrohr (3) aufweist, das Verbrennungsunterstützungsgasrohr (3) umgibt und durch einen Brennerkörper-Kühlmittelkanal (20) von dem Verbrennungsunterstützungsgasrohr (3) getrennt ist und
das Innenrohr (6), das Außenrohr (5), das Rohr (4) für gasförmigen Brennstoff, das Verbrennungsunterstützungsgasrohr (3) und das Kühlrohr (2) koaxial angeordnet sind.

3. Brenner (1) mit einem bildgebenden Gerät (8) gemäß Anspruch 2, wobei die Öffnungen von Rohren in axialer Rohrrichtung in der Reihenfolge Innenrohr (6), Außenrohr (5) und Rohr (4) für gasförmigen Brennstoff entlang der Richtung vorwärts von der Linse (7) angeordnet sind.

4. Elektroofen (90), der mit dem Brenner (1) mit einem bildgebenden Gerät (8), wie in einem der Ansprüche 1 bis 3 vorgetragen, ausgestattet ist, wobei der Elektroofen (90) in Funktion ist, eine kalte Eisenquelle (94) zu schmelzen, um geschmolzenes Eisen herzustellen.

5. Verfahren zum Herstellen von geschmolzenem Eisen durch Schmelzen einer kalten Eisenquelle (94) unter Verwendung eines Elektroofens (90), der mit dem Brenner (1) mit einem bildgebenden Gerät (8), wie in einem der Ansprüche 1 bis 3 vorgetragen, ausgestattet ist, wobei
Betriebsbedingungen des Brenners (1) auf der Grundlage von visueller Information gesteuert werden, welche vom Brenner (1) erfasst wird.

6. Verfahren zum Herstellen von geschmolzenem Eisen gemäß Anspruch 5, wobei
das Verbrennungsunterstützungsgas (30) aus dem Verbrennungsunterstützungsgasrohr (3) eingespritzt wird oder das Verbrennungsunterstützungsgas (30) aus dem Verbrennungsunterstützungsgasrohr (3) eingespritzt wird und der gasförmige Brennstoff (40) aus dem Rohr (4) für gasförmigen Brennstoff eingespritzt wird, um das anhaftende Material von der Linse (7) zu entfernen, wenn die vom Brenner (1) erhaltene visuelle Information das Vorhandensein von anhaftendem Material auf einer Vorderseite der Linse (7) bestätigt.

## Revendications

1. Brûleur (1) ayant un dispositif d'imagerie (8), le brûleur (1) brûlant du combustible gazeux (40) pour former une flamme, le brûleur (1) comprenant :
une lentille (7) ;
le dispositif d'imagerie (8) disposé derrière la lentille (7), où un côté de la lentille (7) vers un objet à imager est défini comme étant l'avant et un côté opposé de la lentille (7) par rapport à l'objet à imager le long d'un axe optique de la lentille (7) est défini comme l'arrière ; et
une structure à tuyaux multiples comprenant :
un tuyau intérieur (6) qui entoure la lentille (7) ; et
un tuyau extérieur (5) qui entoure le tuyau intérieur (6), a un diamètre plus grand que celui du tuyau intérieur (6), et est **caractérisé par** le tuyau extérieur qui est séparé du tuyau intérieur (6) par un passage de réfrigérant de lentille (70)
un tuyau de combustible gazeux (4) disposé radialement vers l'extérieur du tuyau extérieur (5) et opérationnel pour injecter le combustible gazeux (40) dans une direction vers l'avant de la lentille (7) ;
un tuyau de gaz de support de combustion (3) disposé radialement vers l'extérieur du tuyau extérieur (5) et opérationnel pour injecter un gaz de support de combustion (30) dans la direction vers l'avant de la lentille (7) ; et
un tuyau de refroidissement (2) disposé le plus à l'extérieur dans la structure à tuyaux multiples entourant le tuyau de combustible gazeux (4) et le tuyau de gaz de support de combustion (3).

2. Brûleur (1) ayant un dispositif d'imagerie (8) selon la revendication 1, dans lequel le tuyau de combustible gazeux (4) a un diamètre plus grand que celui du tuyau extérieur (5), entoure le tuyau extérieur (5) et est séparé du tuyau extérieur (5) par un passage du combustible gazeux (40),
le tuyau de gaz de support de combustion (3) a un diamètre plus grand que celui du tuyau de combustible gazeux (4), entoure le tuyau de combustible gazeux (4), et est séparé du tuyau de combustible gazeux (4) par un passage du gaz de support de combustion (30),
le tuyau de refroidissement (2) a un diamètre plus grand que celui du tuyau de gaz de support de combustion (3), entoure le tuyau de gaz de support de combustion (3), et est séparé du tuyau de gaz de support de combustion (3) par un passage de réfrigérant de corps de brûleur (20), et
le tuyau intérieur (6), le tuyau extérieur (5), le tuyau de combustible gazeux (4), le tuyau de gaz de support de combustion (3) et le tuyau de refroidissement (2) sont disposés de manière coaxiale.

3. Brûleur (1) ayant un dispositif d'imagerie (8) selon la revendication 2, dans lequel des ouvertures de tuyaux dans une direction axiale de tuyau sont disposées dans l'ordre du tuyau intérieur (6), du tuyau extérieur (5) et du tuyau de combustible gazeux (4) dans la direction vers l'avant de la lentille (7).

4. Four électrique (90) équipé du brûleur (1) ayant un dispositif d'imagerie (8) selon l'une quelconque des revendications 1 à 3, le four électrique (90) étant opérationnel pour faire fondre une source de fer froid (94) afin de produire du fer fondu.

5. Procédé de production de fer fondu en faisant fondre une source de fer froid (94) à l'aide d'un four électrique (90) équipé du brûleur (1) ayant un dispositif d'imagerie (8) selon l'une quelconque des revendications 1 à 3, dans lequel
des conditions de fonctionnement du brûleur (1) sont commandées sur la base d'informations visuelles obtenues auprès du brûleur (1).

6. Procédé de production de fer fondu selon la revendication 5, dans lequel lorsque les informations visuelles obtenues auprès du brûleur (1) confirment la présence d'un matériau adhérent sur une surface frontale de la lentille (7), le gaz de support de combustion (30) est injecté depuis le tuyau de gaz de support de combustion (3) ou le gaz de support de combustion (30) est injecté depuis le tuyau de gaz de support de combustion (3) et le combustible gazeux (40) est injecté depuis le tuyau de combustible gazeux (4), afin de retirer de la lentille (7) le matériau adhérent.
